# FASCICULE DE BREVET EUROPEEN

(11) **EP 1 899 162 B1**
(45) Date de publication et mention de la délivrance du brevet: **27.02.2013**
(21) Numéro de dépôt: 06763675.3
(22) Date de dépôt: 13.06.2006
(51) Int. Cl.: B32B 27/32

(54) **FILM À PLUSIEURS COUCHES**
MEHRSCHICHTFOLIE
MULTILAYER FILM

(30) Priorité: 01.07.2005 FR 0507085
(43) Date de publication de la demande: 19.03.2008
(73) Titulaire: Bollore, 29500 Ergue Gaberic (FR)
(72) Inventeur: BONETTI-RIFFAUD, Josyane, F-29000 Quimper (FR)
(74) Mandataire: Regimbeau
(86) Numéro de dépôt international: PCT/EP2006/063151
(87) Numéro de publication internationale: WO 2007/003487

(56) Documents cités:
- EP-A- 0 286 430
- GB-A- 2 233 934
- US-A- 5 332 616

## Description

L'invention concerne un film multicouche.

Le type de films concerné par l'invention est les films souples, appelés en anglais « soft films », c'est-à-dire aptes à se rétracter beaucoup en exerçant une force faible.

Un domaine d'application de ces films est l'emballage des objets, en particulier des objets, fragiles ou souples, ne devant pas être déformés. Un domaine particulier de l'invention est les films thermorétractables et thermoscellables. Le film est également destiné à une utilisation polyvalente, pour les objets souples ou rigides et pour les divers systèmes de soudure.

L'un des problèmes de ces films est qu'il est difficile de concilier ces propriétés de souplesse avec les impératifs et contraintes de fabrication à l'échelle industrielle.

En effet, les propriétés des films actuels sont souvent obtenues au détriment de leur coût de fabrication, principalement dû au coût des matières premières utilisées pour former les différentes couches.

On cherche donc à sélectionner des matières premières d'un coût relativement bas.

En même temps, les films doivent être faciles à fabriquer et à traiter. Ils doivent en particulier avoir des propriétés améliorées d'étirage et de bi-orientation dans le sens longitudinal et dans le sens transversal et une haute cadence de fabrication.

A l'utilisation, les films doivent également avoir de bonnes propriétés de thermosoudure et il faut éviter que le film thermo - soudé ne se délamine.

Le film doit conserver autant que possible de très bonnes propriétés optiques.

EP-A-0 286 430 décrit un film multicouche thermo-rétractable d'emballage, comprenant (i) une couche d'âme centrale consistant en une résine polyéthylène VLDPE, (ii) deux couches dites intermédiaires et disposées directement au contact de la couche âme, qui consistent en une résine polyéthylène LLDPE, et (iii) deux couches extérieures disposées sur les couches dites intermédiaires et qui consistent soit en une résine EVA, soit en une résine polyéthylène VLDPE.

L'invention vise à obtenir un film satisfaisant dans une large mesure à ces exigences.

A cet effet, un premier objet de l'invention est un film comportant une couche d'âme à base de polyéthylène, des première et deuxième couches extérieures à base de polyéthylène de part et d'autre de la couche d'âme, au moins une première couche intermédiaire entre la couche d'âme et la première couche extérieure et au moins une deuxième couche intermédiaire entre la couche d'âme et la deuxième couche extérieure,
caractérisé en ce que
la couche d'âme contient au moins 50 % en poids d'un polyéthylène ULDPE,
au moins l'une des première et deuxième couches extérieures contient au moins 50 % en poids d'un polyéthylène LLDPE, et
ladite première et/ou deuxième couche intermédiaire est en une première composition à base d'EVA et d'un copolymère d'éthylène et d'au moins un deuxième composé choisi parmi le groupe constitué par les alcènes linéaires d'ordre Cₙ supérieur à l'éthylène, les diènes et les alcènes cycliques.

Le film suivant l'invention s'est révélé être d'un coût de matières premières modéré, tout ayant des propriétés ayant un impact favorable sur sa fabrication et son utilisation :
- faibles à moyennes forces de rétraction et de cohésion,
- faible énergie de rétraction, et en particulier propriétés de rétraction à basse température pour les objets fragiles,
- large plage de rétraction,
- grand allongement à la rupture,
- grand retrait libre,
- grande vitesse de retrait,
- grand allongement de la soudure,
- grande résistance de la soudure.

L'invention sera mieux comprise à la lecture de la description qui va suivre, donnée uniquement à titre d'exemple non limitatif en référence aux dessins annexés, sur lesquels :
- la figure 1 du dessin représente un mode de réalisation d'un film suivant l'invention, vu dans le sens de son épaisseur,
- la figure 2 est un graphique représentant, pour différents exemples de films suivant l'invention, les plages de rétraction en fonction de la température, qui sont pour une température donnée d'un four dans lequel passe le film, la plage de vitesse de passag e que supporte ce film, pour que le film se rétracte autour d'un objet en donnant un aspect esthétique convenable et sans brûler ;
- la figure 3 est un graphique représentant, pour différents exemples de films suivant l'invention, le taux de rétraction en fonction de la température d'huile dans lequel le film est plongé,
- la figure 4 représente en coupe longitudinale un exemple de dispositif de soudure utilisé pour mesurer des paramètres du film suivant l'invention,
- la figure 5 représente en perspective une barre porte-couteau utilisée pour réaliser la soudure et le sectionnement du film dans le dispositif selon la figure 4, la barre étant montrée tête en haut à la figure 5, au lieu d'être montrée tête en bas à la figure 4,
- la figure 6 représente en coupe longitudinale les films avant, puis après la soudure réalisée par le dispositif selon la figure 4,
- la figure 7 représente schématiquement en perspective un système de soudure utilisé pour évaluer la qualité de la soudure du film suivant l'invention, et
- la figure 8 représente schématiquement en coupe longitudinale les fils de soudure utilisés dans le système de soudure de la figure 7.

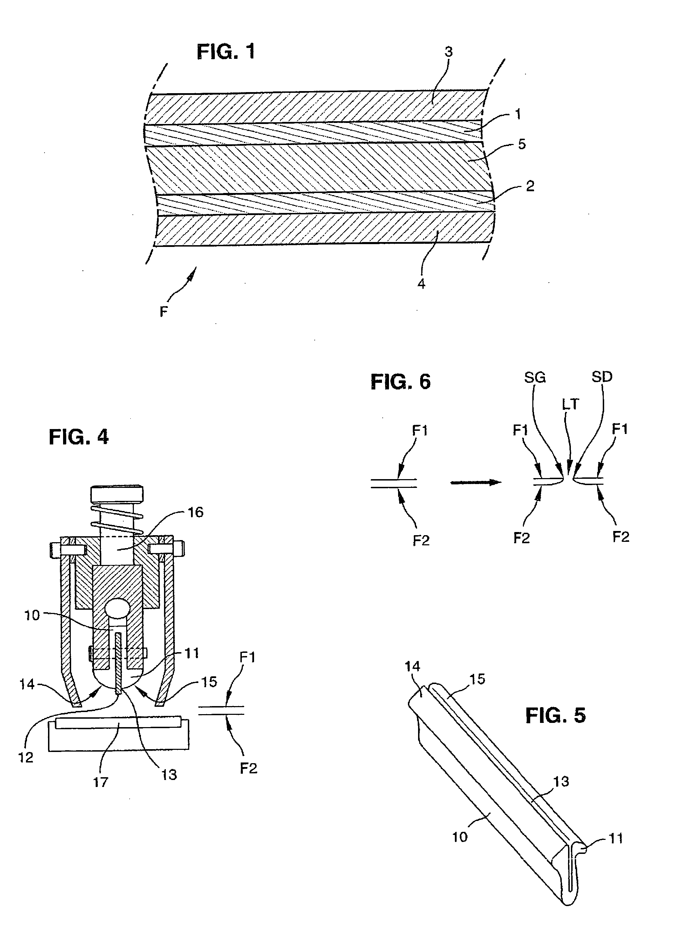

Sur la figure 1 , une première couche intermédiaire supérieure 1 se trouve sur la couche d'âme centrale 5 et une deuxième couche intermédiaire inférieure 2 se trouve sous la couche d'âme centrale 5. Sur la première couche intermédiaire supérieure 1 se trouve une première couche extérieure 3, formant la surface supérieure du film F . Sur la deuxième couche intermédiaire inférieure 2 se trouve une deuxième couche extérieure 4, formant la surface inférieure du film F. Bien entendu, plusieurs couches intermédiaires superposées 1 pourraient être prévues entre la couche 5 et la couche 3 et/ou plusieurs couches intermédiaires superposées 2 pourraient être prévues entre la couche 5 et la couche 4.

Ce film F est fabriqué par exemple par un procédé double - bulle au cours duquel une gaine cylindrique est produite, ainsi que cela est connu par l'homme du métier. Le procédé double-bulle se déroule de la manière suivante : une première gaine cylindrique, appelée primaire, est trempée dans de l'eau pour être refroidie, puis convoyée en hauteur, par exemple à 20 mètres de hauteur. Elle est ensuite réchauffée dans des fours pour atteindre une température déterminée d'orientation. Puis, la gaine est gonflée par de l'air injecté par le bas. La bulle ainsi obtenue est fermée par le bas par des pinces (« nipp » en anglais) et est coupée sur deux côtés par deux lames pour obtenir deux films F séparés, qui sont enroulés sur des rouleaux. Le film F possède un sens longitudinal ou sens machine, qui est son sens d'enroulement sur le rouleau au cours de sa fabrication et un sens transversal parallèle à l'axe du rouleau.

Le film suivant l'invention peut servir d'emballage à tout type d'objets, souples ou rigides. Une utilisation préférée du film suivant l'invention est un film d'emballage fermé par thermosoudure autour d'un ou de plusieurs objets.

La composition de la couche d'âme 5 est telle que celle-ci ait un point de fusion plus bas que le ou les points de fusion des couches extérieures, de manière à ce que la couche d'âme puisse fondre au moins partiellement avant les couches extérieures au cours de la fabrication du film. Ce point de fusion bas de la couche d'âme est par exemple inférieur à 100 °C.

La ou les couches intermédiaires 1 et/ou 2 sont en une composition ayant un point de fusion plus bas que le ou les points de fusion des couches extérieures, de manière à ce que la ou les couches intermédiaires 1 et/ou 2 puissent fondre au moins partiellement et de préférence totalement avant les couches extérieures au cours de la fabrication du film. Ce point de fusion bas de la ou des couches intermédiaires 1 et/ou 2 est par exemple inférieur à 100 °C.

Des modes de réalisations des couches 1, 2, 3, 4, 5 sont les suivants :
- le deuxième composé de la première et/ou deuxième couche intermédiaire 1, 2 est choisi parmi les alcènes d'ordre Cₙ supérieur ou égal à4;
- le deuxième composé de la première et/ou deuxième couche intermédiaire 1, 2 est choisi parmi le groupe constitué du propylène, du butène, du pentène, de l'hexène, de l'heptène, de l'octène ;
- le deuxième composé de la première et/ou deuxième couche intermédiaire 1, 2 contient du propylène et/ou de l'éthylidène norbornène ;
- la première et/ou deuxième couche intermédiaire 1, 2 est en une première composition à base d'EVA et d'un copolymère d'éthylène et de butène ;
- ladite première et/ou deuxième couche intermédiaire 1, 2 est en une première composition à base d'EVA et d'un copolymère d'éthylène et d'octène ;
- le copolymère d'éthylène et du deuxième composé est un copolymère hétérophasique modifié impact ;
- le copolymère d'éthylène et du deuxième composé contient un mélange hétérophasique modifié impact de polypropylène avec un copolymère d'éthylène et de propylène ;
- la proportion en poids d'acétate de vinyle dans l'EVA de la première et/ou deuxième couche intermédiaire 1, 2 est inférieure ou égale à 10 %, et par exemple inférieure à 6 % ;
- l'épaisseur de la première et/ou deuxième couche intermédiaire 1, 2 est inférieure à l'épaisseur de la première et/ou deuxième couche extérieure 3, 4 et est inférieure à l'épaisseur de la couche d'âme 5 ;
- l'épaisseur de la première ou deuxième couche intermédiaire 1, 2 est inférieure à 15 % de l'épaisseur totale du film ;
- l'épaisseur de la couche d'âme est supérieure ou égale à 30 % de l'épaisseur totale du film ;
- l'épaisseur de la première couche extérieure 3 et/ou de la deuxième couche extérieure 4 est comprise entre 15 % et 30 % de l'épaisseur totale du film ;
- la proportion en poids du copolymère d'éthylène et du deuxième composé dans la première et/ou deuxième couche intermédiaire 1, 2 est supérieure ou égale à 10 % ; cette proportion est par exemple supérieure ou égale à 20 % et inférieure ou égale à 60 %, et de préférence inférieure ou égale à 50 % ;
- la couche d'âme 5 est en polyéthylène de densité inférieure ou égale à celle d'un LLDPE, et au moins l'une des première et deuxième couches extérieures 3, 4 est de densité supérieure à celle de la couche d'âme 5 ;
- la couche d'âme 5 est en ULDPE, et au moins l'une des première et deuxième couches extérieures 3, 4 est en LLDPE ;
- la couche d'âme 5 contient en outre un copolymère d'éthylène et d'au moins un deuxième composé choisi parmi le groupe constitué par les alcènes linéaires d'ordre Cₙ supérieur à l'éthylène et les alcènes cycliques. Ce deuxième composé présent dans ce cas dans la couche d'âme peut être le même que celui présent dans la couche intermédiaire 1 et/ou 2 ou en être un autre parmi le groupe mentionné ci-dessus ;
- le film est réticulé par irradiation.
- des agents anti-bloquants peuvent être ajoutés aux couches extérieures et/ou des agents glissants peuvent être ajoutés aux couches extérieures et/ou intermédiaires et/ou centrale.

Les définitions des termes utilisés sont les suivantes :
- un copolymère est un polymère de deux ou de plus de deux monomères.
- l'EVA est le copolymère éthylène / acétate de vinyle.
- le ULDPE ou VLDPE est le polyéthylène de densité très basse ou ultra basse (en anglais : Ultra Low Density Polyethylene, Very Low Density Polyethylene), de densité inférieure ou égale à 0,910 g/cm³ et supérieure ou égale à 0,860 g/cm³.
- le LLDPE est le polyethylène linéaire de basse densité (en anglais : Linear Low Density Polyethylene), de densité supérieure ou égale à 0,911 g/cm³ et inférieure à 0,925 g/cm³.
- le LMDPE est le polyethylène de moyenne densité (en anglais : Linear Medium Density Polyethylene), de densité supérieure ou égale à 0,926 g/cm³ et inférieure à 0,939 g/cm³.
- le HDPE est le polyethylène linéaire de haute densité (en anglais : High Density Polyethylene), de densité supérieure ou égale à 0,940 g/cm³ et inférieure à 0,97 g/cm³.

Des exemples de réalisation du film suivant l'invention sont décrits ci-dessous avec leurs propriétés rassemblées dans le tableau ci-dessous. Dans ces exemples, les proportions sont données en poids. Les paramètres indiqués sont mesurés de la manière suivante, selon les méthodes et normes habituellement utilisées.

Trouble (en anglais « Haze ») : norme ASTM D1003.

Brillant (en anglais « Gloss ») : norme ASTM D523.

Résistance et allongement à la rupture : norme ASTM D882.

Energie Perforation : Energie nécessaire pour transpercer le film, norme NFT 54-198.

Force de retrait : Force exercée pendant le retrait du film, selon la norme NFT 54-125.

Force de cohésion : Force exercée après le retrait du film, à froid, selon la norme NFT 54-125.

Vitesse de retrait : selon la norme NFT 54-125.

Résistance à la déchirure Elmendorf : norme ISO 6383-2.

Résistance et allongement de soudure de type Mushroom : résistance et allongement mesurés sur une soudure large du film, réalisée à 195°C pendant une seconde sous une pression de 35 psi (soit 241325 Pa) dans le sens transversal du film par un di spositif de soudure du type Shanklin à barre Shanklin de type large, ou du type Reynolds, appelé ici « Mushroom », représenté aux figures 4 à 6.

Ce dispositif de soudure comprend une barre transversale 10 à profil en forme de champignon en coupe longitudinale, comportant une tête 11 de soudure 14. Un couteau 12 est inséré et fixé dans une fente transversale et centrale 13 de la tête 11, laissant de part et d'autre du couteau 12 deux surfaces 14, 15 d'application de la tête 11. La tête 11 est tenue dans un bras 16 mobile. Pour effectuer la soudure Mushroom, on insère et on immobilise deux films F1 et F2 superposés entre le dispositif et la contre-barre 17, avec la barre 10 s'étendant dans le sens transversal des films F1, F2. Ces deux films F1, F2 peuvent être un film F replié ou deux films F identiques superposés. Puis, la tête et le couteau étant chauffés à la température de soudure indiquée, on abaisse la tête 11 et le couteau 12 sur les films F1, F2 contre la contre-barre 17 avec la pression indiquée et la durée indiquée, ainsi que cela est indiquée par la flèche à la figure 6, ce qui coupe les films F1, F2 en deux suivant une ligne transversale LT et scelle par les surfaces gauche 14 et droite 15 les films F1 et F2 suivant deux cordons de soudure gauche SG et droite SD par rapport à la ligne de coupe LT. La qualité des soudures des films ainsi soudés F1 et F2 est ensuite évaluée par un essai de traction selon la norme NFT 54-122 pour déterminer la résistance de soudure Mushroom et l'allongement de soudure Mushroom.

Allongement et résistance de soudure basse pression : allongement et résistance mesurés sur la soudure du film dans le sens longitudinal. Pour effectuer la soudure, on fait défiler deux épaisseurs superposées du film sur un couteau chauffé s'étendant longitudinalement. Le contact très rapide des deux films superposés sur le couteau longitudinal chauffé coupe et soude les deux épaisseurs du film d'une manière similaire à la figure 6 lorsque celle-ci est vue non plus en coupe longitudinale mais en coupe transversale, la soudure s'étendant longitudinalement perpendiculairement au plan du dessin. Dans la première méthode indiquée dans le tableau, les soudures basse pression ont été réalisées sur un appareil de laboratoire simulant les machines à soudure continue sans pression sur lame. Ces systèmes de soudure continue équipent les machines automatiques d'emballage de type Beck, BVM, Kallfass et Hugo Beck. Pour le test, la température mesurée au niveau de l'encoche du couteau est de 200°C et la vitesse de passage sur ce couteau est de 10 mètres par minute, la cadence habituelle des machines précitées pouvant être de 30 à 40 mètres par minute. La qualité des soudures des films ainsi soudés est ensuite évaluée par un essai de traction selon la norme NFT 54-122 pour déterminer la résistance de soudure basse pression et l'allongement de soudure basse pression.

Retrait libre : norme NFT 54-115.

Dans les exemples 1 à 6, le rapport d'épaisseur des couches prises de haut en bas (couche extérieure supérieure - couche intermédiaire supérieure - couche d'âme - couche intermédiaire inférieure - couche extérieure inférieure) est, en pourcentage de l'épaisseur totale du film : 18%-12%-40%-12%-18%.

### Exemples 1 et 4

Les couches extérieures sont en LLDPE à 0,914 g/cm³ de densité.

Les couches intermédiaires sont en un mélange de 80 % d'EVA à 5% d'acétate de vinyle, et de 20 % d'un copolymère d'éthylène et de butène à 0,885 g/cm³ de densité.

La couche d'âme est en ULDPE à 0,905 g/cm³ de densité.

### Exemple 2

Les couches extérieures sont en LLDPE à 0,914 g/cm³ de densité.

Les couches intermédiaires sont en un mélange de 80 % d'EVA à 5% d'acétate de vinyle, et de 20 % d'un mélange hétérophasique modifié impact de polypropylène avec un copolymère d'éthylène et de propylène (ce mélange est par exemple un « supersupersoft catalloy HECO » en anglais, c'est-à-dire un copolymère hétérophasique réalisé par procédé du type Catalloy) à 0,870 g/cm³ de densité.

La couche d'âme est en un mélange de 80 % de ULDPE à 0,905 g/cm³ de densité et de 20 % du mélange hétérophasique modifié impact de polypropylène avec le copolymère d'éthylène et de propylène à 0,870 g/cm³ de densité des couches intermédiaires.

### Exemple 3

Les couches extérieures sont en LLDPE à 0,914 g/cm³ de densité.

Les couches intermédiaires sont en un mélange de 80 % d'EVA à 5% d'acétate de vinyle, et de 20 % d'un terpolymère éthylène - propylène - éthylidène norbornène à 0,88 g/cm³ de densité.

La couche d'âme est en un mélange de 80 % de ULDPE à 0,905 g/cm³ de densité et de 20 % du terpolymère éthylène - propylène - éthylidène norbornène à 0,88 g/cm³ de densité des couches intermédiaires.

### Exemple 5

Les couches extérieures sont en LLDPE à 0,914 g/cm³ de densité.

Les couches intermédiaires sont en un mélange de 50 % d'EVA à 5% d'acétate de vinyle, et de 50 % d'un copolymère d'éthylène et de butène à 0,885 g/cm³ de densité.

La couche d'âme est en ULDPE à 0,905 g/cm³ de densité.

### Exemple 6

Les couches extérieures sont en LLDPE à 0,914 g/cm³ de densité.

Les couches intermédiaires sont en un mélange de 80 % d'EVA à 5% d'acétate de vinyle, et de 20 % d'un copolymère d'éthylène et d'octène à 0,885 g/cm³ de densité.

La couche d'âme est en ULDPE à 0,905 g/cm³ de densité.

| Exemples | 1 | 2 | 3 | 4 | 5 | 6 |
|---|---|---|---|---|---|---|
| Epaisseur moyenne (µm) | 16 à 18 | 16 à 18 | 16 à 18 | 14 à 16 | 14 à 16 | 14 à 16 |
| Trouble | 3,6 | 3,5 | 3 | 4,5 | 4,5 | 4,6 |
| Brillant 20° | 110 | 115 | 123 | 115 | 109 | 109 |
| Résistance à la rupture (daN/mm²) | 10,5 | 9 | 9 | 9,5 | 8,5 | 9,8 |
| Allongement à la rupture (%) | 149,5 | 140 | 129 | 135,5 | 156,5 | 127,5 |
| Résistance à la déchirure Elmendorf (mN/Nm) | 8 | 4,2 | 5,7 | 4,6 | 5,52 | 4,9 |
| Energie Perforation (mJ/µm) | 51 | 39 | 45 | 46 | 52 | 58 |
| Force de retrait (10⁻¹MPa) | 24 | 23,5 | 24 | 19,3 | 16,3 | 20 |
| Force de cohésion (10⁻¹MPa) | 5 | 4 | 4 | 4 | 3 | 7 |
| Vitesse de retrait (%/s) | 25 | 18 | 20 | 22 | 23 | 22 |
| Résistance de soudure MUSHROOM (N) | 27,5 | 25 | 23 | 23,6 | 18,6 | 21,3 |
| Allongement de soudure MUSHROOM (%) | 91,8 | 69 | 69 | 68,6 | 64,2 | 63,2 |
| Allongement de soudure basse pression (%) | 63,3 | 54,4 | 48 | 57 | 90 | 50,9 |
| Résistance de soudure basse pression (N) | 24,2 | 22 | 21 | 21,1 | 18,5 | 19,9 |

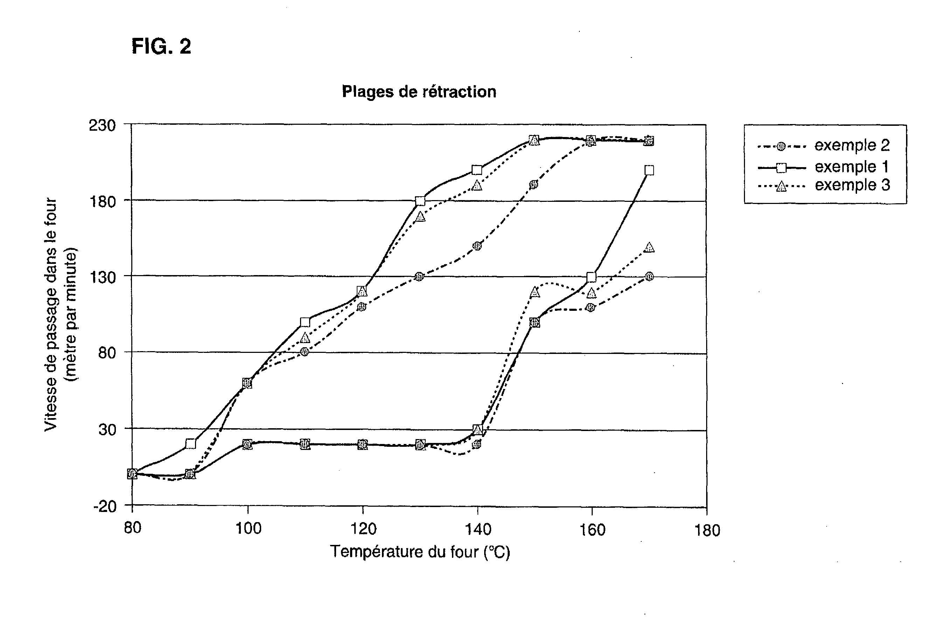

La figure 2 donne la plage de rétraction en température et en vitesse de passage dans un four chauffé à cette température pour les exemples 1, 2 et 3. Pour chacun de ces exemples, la figure 2 indique pour différentes températures un point de vitesse haute et un point de vitesse basse, qui représentent respectivement les valeurs maximum et minimum de vitesse à ces températures. Chaque exemple possède donc une courbe de vitesse haute joignant les points de vitesse haute et une courbe de vitesse basse joignant les points de vitesse basse. Les plages de rétraction en température et en vitesse de passage de chaque exemple sont représentées par l'écart entre la courbe de vitesse haute et la courbe de vitesse basse de cet exemple.

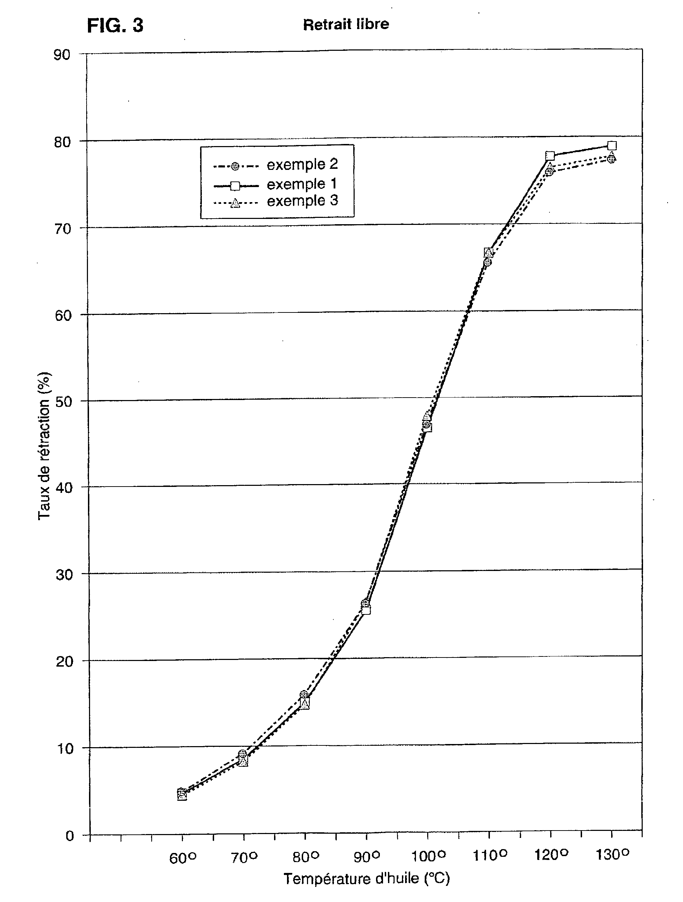

La figure 3 donne le retrait libre des exemples 1, 2 et 3 en fonction de la température.

Des mesures d'allongement et résistance ont également été effectuées sur la soudure basse pression ayant été réalisée de la manière indiquée ci-dessus, mais selon une deuxième méthode sur une machine de type Kallfass, Universa 400NT, avec une température de lame de 200°C et une vitesse de passage de 20 à 25 mètres par minute.

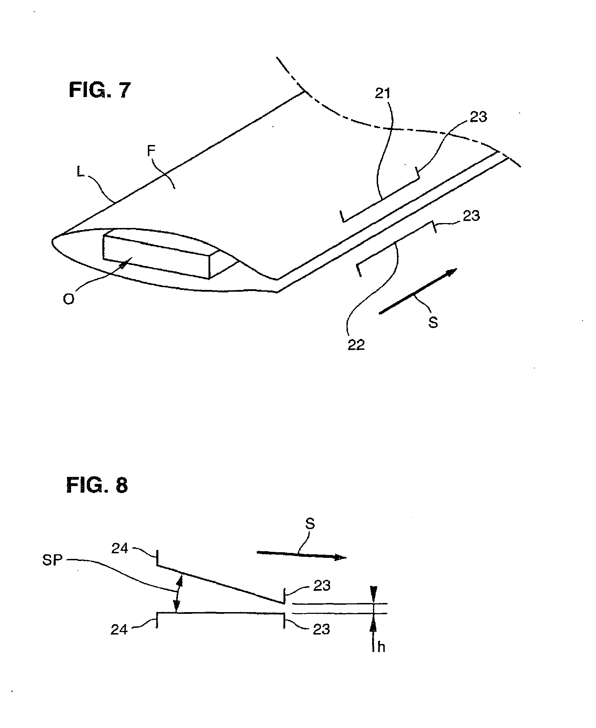

Une troisième méthode de soudure basse pression a utilisé une machine de type Shanklin HS-3, comportant un fil chaud longitudinal supérieur 21 et un fil chaud longitudinal inférieur 22, ainsi que cela est représenté aux figures 7 et 8. Le film F, replié par une ligne de pliure longitudinale L située de l'autre côté des fils 21, 22 en deux épaisseurs superposées, est passé entre les fils 21, 22 à une vitesse de 30 à 35 mètres par minute dans le sens longitudinal. La section SP de passage comprise entre les deux fils 21 et 22 va en se rétrécissant dans le sens S de l'avancée du film de l'entrée 24 vers la sortie 23 dans le sens longitudinal, pour avoir une hauteur H d'environ 1 mm à la sortie 23 des fils 21, 22. On règle la température de soudure de l'entrée 24 et de la sortie 23 par deux potentiomètres gradués de manière croissante en fonction de l'intensité de chauffage et de la température obtenue.

Une telle machine est utilisée habituellement en production pour entourer un objet O à emballer entre les deux épaisseurs du film. Pour les films réticulés connus, les potentiomètres de réglage de la température de l'entrée 24 et de la sortie des fils 21, 22 sont habituellement réglés entre 60 et 85.

Pour la mesure de l'allongement et de la résistance de la soudure basse pression du film suivant l'invention selon la troisième méthode, le potentiomètre de réglage de la température de l'entrée 24 est réglé à 30 sur la position de chauffage bas (en anglais «Low Heat » sur la machine), tandis que le potentiomètre de réglage de la température de la sortie 23 est réglé à 50, sur la position de chauffage intense (en anglais «High Heat » sur la machine).

Des soudures continues satisfaisantes ont pu être effectuées selon cette troisième méthode sur le film suivant l'invention, avec donc des soudures à plus basse température qu'avec les films réticulés de l'état de la technique, même si la troisième méthode de soudure est très critique du fait des très basse intensités de chauffage des fils et des très grandes vitesses de passage.

Le tableau ci-dessous donne les valeurs mesurées selon la norme NFT 54-122 pour l'allongement et la résistance de la soudure basse pression réalisée selon les deuxième et troisième méthodes.

| | | Deuxième Méthode | Troisième méthode |
|---|---|---|---|
| Exemple 1 | Résistance de soudure basse pression (N) | 22 | 17,3 |
| Exemple 1 | Allongement de soudure basse pression (%) | 41 | 29,5 |
| Exemple 4 | Résistance de soudure basse pression (N) | - | 8,8 |
| Exemple 4 | Allongement de soudure basse pression (%) | - | 17,4 |

Suivant un autre mode de réalisation de l'invention, pour augmenter le module d'élasticité du film et la résistance à la déchirure, la couche d'âme contient, en plus du polyéthylène ULDPE, du polyéthylène LMDPE ou mMDPE (m pour métallocène) en une proportion de 20% à 50 % en poids, de préférence de 20 % à 40 %, et notamment de 20 % à 35 % pour ne pas trop faire augmenter les forces de rétraction et de cohésion, et par exemple à 30 % dans un exemple de réalisation.

En outre, au moins l'une des première et deuxième couches extérieures 3, 4 peut contenir, en plus du polyéthylène LLDPE, du polyéthylène fabriqué par catalyseur métallocène.

## Revendications

1. Film comportant une couche d'âme à base de polyéthylène, des première et deuxième couches extérieures à base de polyéthylène de part et d'autre de la couche d'âme, au moins une première couche intermédiaire entre la couche d'âme et la première couche extérieure et au moins une deuxième couche intermédiaire entre la couche d'âme et la deuxième couche extérieure,
**caractérisé en ce que**
la couche d'âme contient au moins 50 % en poids d'un polyéthylène ULDPE,
au moins l'une des première et deuxième couches extérieures contient au moins 50 % en poids d'un polyéthylène LLDPE, et
ladite première et/ou deuxième couche intermédiaire est en une première composition à base d'EVA et d'un copolymère d'éthylène et d'au moins un deuxième composé choisi parmi le groupe constitué par les alcènes linéaires d'ordre Cₙ supérieur à l'éthylène, les diènes et les alcènes cycliques.

2. Film suivant la revendication 1, **caractérisé en ce que**
la couche d'âme possède un point de fusion plus bas que celui ou ceux des couches extérieures.

3. Film suivant l'une quelconque des revendications précédentes, **caractérisé en ce que**
ladite première et/ou deuxième couche intermédiaire possède un point de fusion plus bas que celui ou ceux des couches extérieures.

4. Film suivant l'une quelconque des revendications précédentes, **caractérisé en ce que**
le point de fusion bas de la couche d'âme et/ou de ladite première et/ou deuxième couche intermédiaire est inférieur à 100 °C.

5. Film suivant l'une quelconque des revendications précédentes, **caractérisé en ce que**
la proportion en poids d'acétate de vinyle dans l'EVA de ladite première et/ou deuxième couche intermédiaire est inférieure ou égale à 10 %.

6. Film suivant l'une quelconque des revendications précédentes, **caractérisé en ce que**
l'épaisseur de ladite première et/ou deuxième couche intermédiaire est inférieure à l'épaisseur de la première et/ou deuxième couche extérieure et est inférieure à l'épaisseur de la couche d'âme.

7. Film suivant l'une quelconque des revendications précédentes, **caractérisé en ce que**
l'épaisseur de ladite première ou deuxième couche intermédiaire est inférieure à 15 % de l'épaisseur totale du film.

8. Film suivant l'une quelconque des revendications précédentes, **caractérisé en ce que**
l'épaisseur de la couche d'âme est supérieure ou égale à 30 % de l'épaisseur totale du film.

9. Film suivant l'une quelconque des revendications précédentes, **caractérisé en ce que**
l'épaisseur de la première couche extérieure et/ou de la deuxième couche extérieure est comprise entre 15 % et 30 % de l'épaisseur totale du film.

10. Film suivant l'une quelconque des revendications précédentes, **caractérisé en ce que**
le rapport d'épaisseur respectivement de la première couche extérieure, de la première couche intermédiaire, de la couche d'âme, de la deuxième couche intermédiaire et de la deuxième couche extérieure inférieure est, en pourcentage de l'épaisseur totale du film : 18%-12%-40%-12%-18%.

11. Film suivant l'une quelconque des revendications précédentes, **caractérisé en ce que**
la proportion en poids du copolymère d'éthylène et dudit deuxième composé dans la première et/ou deuxième couche intermédiaire est supérieure ou égale à 10 %.

12. Film suivant l'une quelconque des revendications précédentes, **caractérisé en ce que**
la couche d'âme est en polyéthylène de densité inférieure ou égale à celle d'un LLDPE,
au moins l'une des première et deuxième couches extérieures est de densité supérieure à celle de la couche d'âme.

13. Film suivant l'une quelconque des revendications précédentes, **caractérisé en ce que**
le polyéthylène ULDPE est de densité inférieure ou égale à 0,910 g/cm³, et
le polyéthylène LLDPE est de densité supérieure ou égale à 0,911 g/cm³ et inférieure à 0,925 g/cm³.

14. Film suivant l'une quelconque des revendications précédentes, **caractérisé en ce que**
la couche d'âme contient en outre un copolymère d'éthylène et d'au moins un deuxième composé choisi parmi le groupe constitué par les alcènes linéaires d'ordre Cₙ supérieur à l'éthylène et les alcènes cycliques.

15. Film suivant l'une quelconque des revendications 1 à 13, **caractérisé en ce que**
la couche d'âme est en ULDPE,
au moins l'une des première et deuxième couches extérieures est en LLDPE.

16. Film suivant l'une quelconque des revendications précédentes, **caractérisé en ce que**
ledit deuxième composé est choisi parmi les alcènes d'ordre Cₙ supérieur ou égal à 4.

17. Film suivant l'une quelconque des revendications précédentes, **caractérisé en ce que**
ledit deuxième composé est choisi parmi le groupe constitué du propylène, du butène, du pentène, de l'hexène, de l'heptène, de l'octène.

18. Film suivant l'une quelconque des revendications 1 à 17, **caractérisé en ce que**
ladite première et/ou deuxième couche intermédiaire est en une première composition à base d'EVA et d'un copolymère d'éthylène et de butène.

19. Film suivant l'une quelconque des revendications 1 à 18, **caractérisé en ce que**
les couches extérieures sont en LLDPE à 0,914 g/cm³ de densité, les couches intermédiaires sont en un mélange de 80 % d'EVA à 5% d'acétate de vinyle, et de 20 % d'un copolymère d'éthylène et de butène à 0,885 g/cm³ de densité,
la couche d'âme est en ULDPE à 0,905 g/cm³ de densité.

20. Film suivant l'une quelconque des revendications 1 à 18, **caractérisé en ce que**
les couches extérieures sont en LLDPE à 0,914 g/cm³ de densité, les couches intermédiaires sont en un mélange de 50 % d'EVA à 5% d'acétate de vinyle, et de 50 % d'un copolymère d'éthylène et de butène à 0,885 g/cm³ de densité,
la couche d'âme est en ULDPE à 0,905 g/cm³ de densité.

21. Film suivant l'une quelconque des revendications 1 à 17, **caractérisé en ce que**
ladite première et/ou deuxième couche intermédiaire est en une première composition à base d'EVA et d'un copolymère d'éthylène et d'octène.

22. Film suivant l'une quelconque des revendications 1 à 17 et 21, **caractérisé en ce que**
les couches extérieures sont en LLDPE à 0,914 g/cm³ de densité,
les couches intermédiaires sont en un mélange de 80 % d'EVA à 5% d'acétate de vinyle, et de 20 % d'un copolymère d'éthylène et d'octène à 0,885 g/cm³ de densité,
la couche d'âme est en ULDPE à 0,905 g/cm³ de densité.

23. Film suivant l'une quelconque des revendications 1 à 15, **caractérisé en ce que**
ledit deuxième composé contient du propylène et/ou de l'éthylidène norbomène.

24. Film suivant l'une quelconque des revendications 1 à 14, **caractérisé en ce que**
les couches extérieures sont en LLDPE à 0,914 g/cm³ de densité,
les couches intermédiaires sont en un mélange de 80 % d'EVA à 5% d'acétate de vinyle, et de 20 % d'un terpolymère éthylène - propylène - éthylidène norbornène à 0,88 g/cm³ de densité,
la couche d'âme est en un mélange de 80 % de ULDPE à 0,905 g/cm³ de densité et de 20 % du terpolymère éthylène - propylène - éthylidène norbornène à 0,88 g/cm³ de densité des couches intermédiaires.

25. Film suivant l'une quelconque des revendications 1 à 15, **caractérisé en ce que**
le copolymère d'éthylène et du deuxième composé est un copolymère hétérophasique modifié impact.

26. Film suivant l'une quelconque des revendications 1 à 15, **caractérisé en ce que**
le copolymère d'éthylène et du deuxième composé contient un mélange hétérophasique modifié impact de polypropylène avec un copolymère d'éthylène et de propylène.

27. Film suivant l'une quelconque des revendications 1 à 14, **caractérisé en ce que**
les couches extérieures sont en LLDPE à 0,914 g/cm³ de densité,
les couches intermédiaires sont en un mélange de 80 % d'EVA à 5% d'acétate de vinyle, et de 20 % d'un mélange hétérophasique modifié impact de polypropylène avec un copolymère d'éthylène et de propylène à 0,870 g/cm³ de densité,
la couche d'âme est en un mélange de 80 % de ULDPE à 0,905 g/cm³ de densité et de 20 % du mélange hétérophasique modifié impact de polypropylène avec le copolymère d'éthylène et de propylène à 0,870 g/cm³ de densité des couches intermédiaires.

28. Film suivant l'une quelconque des revendications précédentes, **caractérisé en ce que**
au moins l'une des première et deuxième couche extérieures contient, en plus du polyéthylène LLDPE, du polyéthylène fabriqué par catalyseur métallocène.

29. Film suivant l'une quelconque des revendications précédentes, **caractérisé en ce que**
la couche d'âme contient, en plus du polyéthylène ULDPE, du polyéthylène LMDPE ou mMDPE de 20% à 50 % en poids.

30. Film suivant l'une quelconque des revendications précédentes, **caractérisé en ce que**
la couche d'âme contient, en plus du polyéthylène ULDPE, du polyéthylène LMDPE ou mMDPE de 20% à 35 % en poids.

31. Film suivant l'une quelconque des revendications précédentes, **caractérisé en ce que**
le film est réticulé par irradiation.

32. Utilisation du film suivant l'une quelconque des revendications précédentes comme emballage.

33. Utilisation du film suivant l'une quelconque des revendications 1 à 31 comme emballage fermé par thermosoudure autour d'un ou de plusieurs objets.

## Claims

1. Film comprising a polyethylene-based core layer, first and second polyethylene-based outer layers on either side of the core layer, at least one first intermediate layer between the core layer and the first outer layer and at least one second intermediate layer between the core layer and the second outer layer,
**characterized in that**
the core layer contains at least 50% by weight of a ULDPE polyethylene,
at least one of the first and second outer layers contains at least 50% by weight of a LLDPE polyethylene, and
said first and/or second intermediate layer is made of a first composition based on EVA and on a copolymer of ethylene and of at least one second compound selected from the group consisting in the linear alkenes of order Cₙ greater than ethylene, the dienes and the cyclic alkenes.

2. Film as claimed in claim 1, **characterized in that** the core layer possesses a lower melting point than that or those of the outer layers.

3. Film as claimed in any of the preceding claims, **characterized in that**
said first and/or second intermediate layer possesses a melting point lower than that or those of the outer layers.

4. Film as claimed in any of the preceding claims, **characterized in that**
the low melting point of the core layer and/or of said first and/or second intermediate layer is less than 100°C.

5. Film as claimed in any of the preceding claims, **characterized in that**
the proportion by weight of vinyl acetate in the EVA of said first and/or second intermediate layer is less than or equal to 10%.

6. Film as claimed in any of the preceding claims, **characterized in that**
the thickness of said first and/or second intermediate layer is less than the thickness of the first and/or second outer layer and is less than the thickness of the core layer.

7. Film as claimed in any of the preceding claims, **characterized in that**
the thickness of said first or second intermediate layer is less than 15% of the total thickness of the film.

8. Film as claimed in any of the preceding claims, **characterized in that**
the thickness of the core layer is greater than or equal to 30% of the total thickness of the film.

9. Film as claimed in any of the preceding claims, **characterized in that**
the thickness of the first outer layer and/or of the second outer layer is between 15% and 30% of the total thickness of the film.

10. Film as claimed in any of the preceding claims, **characterized in that**
the thickness ratio of, respectively, the first outer layer, the first intermediate layer, the core layer, the second intermediate layer and the second lower outer layer is, as a percentage of the total thickness of the film:
18% - 12% - 40% - 12% - 18%.

11. Film as claimed in any of the preceding claims, **characterized in that**
the proportion by weight of the copolymer of ethylene and of said second compound in the first and/or second intermediate layer is greater than or equal to 10%.

12. Film as claimed in any of the preceding claims, **characterized in that**
the core layer is made of polyethylene of density less than or equal to that of an LLDPE,
at least one of the first and second outer layers is of density greater than that of the core layer.

13. Film as claimed in any of the preceding claims, **characterized in that**
the ULDPE polyethylene is of density less than or equal to 0.910 g/cm³, and
the LLDPE polyethylene is of density greater than or equal to 0.911 g/cm³ and less than 0.925 g/cm³.

14. Film as claimed in any of the preceding claims, **characterized in that**
the core layer contains in addition a copolymer of ethylene and of at least one second compound selected from the group consisting in linear alkenes of order Cₙ greater than ethylene and the cyclic alkenes.

15. Film as claimed in any of claims 1 to 13, **characterized in that**
the core layer is made of ULDPE,
at least one of the first and second outer layers is made of LLDPE.

16. Film as claimed in any of the preceding claims, **characterized in that**
said second compound is selected from the alkenes of order Cₙ greater than or equal to 4.

17. Film as claimed in any of the preceding claims, characteristic in that
said second compound is selected from the group consisting in of propylene, butene, pentene, hexene, heptene and octene.

18. Film as claimed in any of claims 1 to 17, **characterized in that**
said first and/or second intermediate layer is made of a first composition based on EVA and on a copolymer of ethylene and butene.

19. Film as claimed in any of claims 1 to 18, **characterized in that**
the outer layers are made of LLDPE at 0.914 g/cm^{3 3} density,
the intermediate layers are made of a mixture of 80% EVA at 5% vinyl acetate, and of 20% of a copolymer of ethylene and butene at 0.885 g/cm³ density,
the core layer is in ULDPE at 0.905 g/cm³ density.

20. Film as claimed in any of claims 1 to 18, **characterized in that**
the outer layers are made of LLDPE at 0.914 g/cm³ density,
the intermediate layers are made of a mixture of 50% of EVA at 5% vinyl acetate, and of 50% of a copolymer of ethylene and butene at 0.885 g/cm³ density,
the core layer is made of ULDPE at 0.905 g/cm³ density.

21. Film as claimed in any of claims 1 to 17, **characterized in that**
said first and/or second intermediate layer is made of a first composition based on EVA and on a copolymer of ethylene and octene.

22. Film as claimed in any of claims 1 to 17 and 21, **characterized in that**
the outer layers are made of LLDPE at 0.914 g/cm³ density,
the intermediate layers are made of a mixture of 80% EVA at 5% vinyl acetate, and of 20% of a copolymer of ethylene and octene at 0.885 g/cm³ density,
the core layer is made of ULDPE at 0.905 g/cm³.

23. Film as claimed in any of claims 1 to 15, **characterized in that**
said second compound contains propylene and/or or ethylidene norbornene.

24. Film as claimed in any of claims 1 to 14, **characterized in that**
the outer layers are made of LLDPE at 0.914 g/cm³ density,
the intermediate layers are made of a mixture of 80% of EVA at 5% vinyl acetate, and of 20% of a terpolymer of ethylene - propylene - ethylidene norbornene at 0.88 g/cm³ density,
the core layer is made of a mixture of 80% of ULDPE at 0.905 g/cm³ density, and of 20% of a terpolymer of ethylene - propylene - ethylidene norbornene at 0.88 g/cm³ density of the intermediate layers.

25. Film as claimed in any of claims 1 to 15, **characterized in that**
the copolymer of ethylene and of the second compound is an impact modified heterophasic copolymer.

26. Film as claimed in any of claims 1 to 15, **characterized in that**
the copolymer of ethylene and of the second compound contains an impact modified heterophasic mixture of polypropylene with a copolymer of ethylene and propylene.

27. Film as claimed in any of claims 1 to 14, **characterized in that**
the outer layers are made of LLDPE at 0.914 g/cm³ density,
the intermediate layers are made of a mixture of 80% EVA at 5% vinyl acetate, and of 20% of an impact modified heterophasic mixture of polypropylene with a copolymer of ethylene and propylene at 0.870 g/cm³ density,
the core layer is made of a mixture of 80% of ULDPE at 0.905 g/cm³ density, and of 20% of the impact modified heterophasic mixture of polypropylene with the copolymer of ethylene and propylene at 0.870 g/cm³ density of the intermediate layers.

28. Film as claimed in any of the preceding claims, **characterized in that**
at least one of the first and second outer layers contains, in addition to the LLDPE polyethylene, polyethylene manufactured by metallocene catalyst.

29. Film as claimed in one of the preceding claims, **characterized in that**
the core layer contains, in addition to the ULDPE polyethylene, LMDPE or mMDPE polyethylene of 20% to 50% by weight.

30. Film as claimed in any of the preceding claims, **characterized in that**
the core layer contains, in addition to the ULDPE polyethylene, LMDPE or mMDPE polyethylene of 20% to 35% by weight.

31. Film as claimed in any of the preceding claims, **characterized in that**
the film is reticulated by irradiation.

32. Use of the film as claimed in any of the preceding claims as packaging.

33. Use of the film as claimed in any of the claims 1 to 31 as packaging closed by heat-sealing around one or more objects.

## Patentansprüche

1. Folie, umfassend eine Kernschicht auf Basis von Polyethylen, eine erste und eine zweite Außenschicht auf Basis von Polyethylen auf beiden Seiten der Kernschicht, mindestens eine erste Zwischenschicht zwischen der Kernschicht und der ersten Außenschicht und mindestens eine zweite Zwischenschicht zwischen der Kernschicht und der zweiten Außenschicht,
**dadurch gekennzeichnet, dass**
- die Kernschicht mindestens 50 Gew.% eines Polyethylens PE-ULD enthält,
- mindestens eine der ersten und zweiten Außenschichten mindestens 50 Gew.% eines Polyethylens PE-LLD enthält, und
- die erste und/oder die zweite Zwischenschicht aus einer ersten Zusammensetzung auf Basis von EVA und einem Copolymer von Ethylen und mindestens einer zweiten Verbindung, die ausgewählt ist aus der Gruppe bestehend aus linearen Alkenen der Ordnung Cₙ oberhalb von Ethylen, Dienen und zyklischen Alkenen, gebildet ist.

2. Folie nach Anspruch 1, **dadurch gekennzeichnet, dass**
- die Kernschicht einen Schmelzpunkt aufweist, der niedriger ist als derjenige oder diejenigen der Außenschichten.

3. Folie nach einem der vorangehenden Ansprüche, **dadurch gekennzeichnet, dass**
- die erste und/oder die zweite Zwischenschicht einen Schmelzpunkt aufweist, der niedriger ist als derjenige oder diejenigen der Außenschichten.

4. Folie nach einem der vorangehenden Ansprüche, **dadurch gekennzeichnet, dass**
- der niedrige Schmelzpunkt der Kernschicht und/oder der ersten und/oder der zweiten Zwischenschicht unterhalb von 100 °C liegt.

5. Folie nach einem der vorangehenden Ansprüche, **dadurch gekennzeichnet, dass**
- der Gewichtsanteil von Vinylacetat in dem EVA der ersten und/oder der zweiten Zwischenschicht kleiner oder gleich 10% ist.

6. Folie nach einem der vorangehenden Ansprüche, **dadurch gekennzeichnet dass**
- die Dicke der ersten und/oder der zweiten Zwischenschicht geringer ist als die Dicke der ersten und/oder der zweiten Außenschicht und geringer ist als die Dicke der Kernschicht.

7. Folie nach einem der vorangehenden Ansprüche, **dadurch gekennzeichnet dass**
- die Dicke der ersten oder der zweiten Zwischenschicht geringer ist als 15% der Gesamtdicke der Folie.

8. Folie nach einem der vorangehenden Ansprüche, **dadurch gekennzeichnet dass**
- die Dicke der Kernschicht größer oder gleich 30% der Gesamtdicke der Folie ist.

9. Folie nach einem der vorangehenden Ansprüche, **dadurch gekennzeichnet dass**
- die Dicke der ersten Außenschicht und/oder der zweiten Außenschicht zwischen 15% und 30% der Gesamtdicke der Folie liegt.

10. Folie nach einem der vorangehenden Ansprüche, **dadurch gekennzeichnet dass**
- das Verhältnis der jeweiligen Dicken der ersten Außenschicht, der ersten Zwischenschicht, der Kernschicht, der zweiten Zwischenschicht und der zweiten Außenschicht, in Prozent der Gesamtdicke des Films, 18% - 12% - 40% - 12% - 18% ist.

11. Folie nach einem der vorangehenden Ansprüche, **dadurch gekennzeichnet dass**
- das Gewichtsverhältnis des Copolymers von Ethylen und der zweiten Verbindung in der ersten und/oder der zweiten Zwischenschicht größer oder gleich 10% ist.

12. Folie nach einem der vorangehenden Ansprüche, **dadurch gekennzeichnet dass**
- die Kernschicht aus einem Polyethylen gebildet ist, dessen Dichte kleiner oder gleich derjenigen eines PE-LLD ist,
- die erste und/oder die zweite Zwischenschicht eine höhere Dichte aufweist als diejenige der Kernschicht.

13. Folie nach einem der vorangehenden Ansprüche, **dadurch gekennzeichnet dass**
- das Polyethylen PE-ULD eine Dichte kleiner oder gleich 0,910 g/cm³ aufweist, und
- das Polyethylen PE-LLD eine Dichte größer oder gleich 0,911 g/cm³ und kleiner als 0,925 g/cm³ aufweist.

14. Folie nach einem der vorangehenden Ansprüche, **dadurch gekennzeichnet dass**
- die Kernschicht ferner ein Copolymer von Ethylen und mindestens einer zweiten Verbindung, die ausgewählt ist aus der Gruppe bestehend aus linearen Alkenen der Ordnung Cₙ oberhalb von Ethylen und zyklischen Alkenen, enthält.

15. Folie nach einem der Ansprüche 1 bis 13, **dadurch gekennzeichnet, dass**
- die Kernschicht aus PE-ULD gebildet ist,
- die erste und/oder die zweite Außenschicht aus PE-LLD gebildet ist.

16. Folie nach einem der vorangehenden Ansprüche, **dadurch gekennzeichnet, dass**
- die zweite Verbindung ausgewählt ist aus Alkenen der Ordnung Cₙ größer oder gleich 4.

17. Folie nach einem der vorangehenden Ansprüche, **dadurch gekennzeichnet, dass**
- die zweite Verbindung ausgewählt ist aus der Gruppe bestehend aus Propylen, Buten, Penten, Hexen, Hepten und Octen.

18. Folie nach einem der Ansprüche 1 bis 17, **dadurch gekennzeichnet, dass**
- die erste und/oder die zweite Zwischenschicht aus einer ersten Zusammensetzung auf Basis von EVA und einem Copolymer von Ethylen und Buten gebildet ist.

19. Folie nach einem der Ansprüche 1 bis 18, **dadurch gekennzeichnet, dass**
- die Außenschichten aus PE-LLD mit einer Dichte von 0,914 g/cm³ gebildet sind,
- die Zwischenschichten aus einer Mischung von 80% EVA mit 5% Vinylacetat und von 20% eines Copolymers von Ethylen und Buten mit einer Dichte von 0,885 g/cm³ gebildet sind,
- die Kernschicht aus PE-ULD mit einer Dichte von 0,905 g/cm³ gebildet ist.

20. Folie nach einem der Ansprüche 1 bis 18, **dadurch gekennzeichnet, dass**
- die Außenschichten aus PE-LLD mit einer Dichte von 0,914 g/cm³ gebildet sind,
- die Zwischenschichten aus einer Mischung von 50% EVA mit 5% Vinylacetat und von 50% eines Copolymers von Ethylen und Buten mit einer Dichte von 0,885 g/cm³ gebildet sind,
- die Kernschicht aus PE-ULD mit einer Dichte von 0,905 g/cm³ gebildet ist.

21. Folie nach einem der Ansprüche 1 bis 17, **dadurch gekennzeichnet, dass**
- die erste und/oder die zweite Zwischenschicht aus einer ersten Zusammensetzung auf Basis von EVA und einem Copolymer von Ethylen und Octen gebildet ist.

22. Folie nach einem der Ansprüche 1 bis 17 und 21, **dadurch gekennzeichnet, dass**
- die Außenschichten aus PE-LLD mit einer Dichte von 0,914 g/cm³ gebildet sind,
- die Zwischenschichten aus einer Mischung von 80% EVA mit 5% Vinylacetat und von 20% eines Copolymers von Ethylen und Octen mit einer Dichte von 0,885 g/cm³ gebildet sind,
- die Kernschicht aus PE-ULD mit einer Dichte von 0,905 g/cm³ gebildet ist.

23. Folie nach einem der Ansprüche 1 bis 15, **dadurch gekennzeichnet, dass**
- die zweite Verbindung Propylen und/oder Ethyliden-Norbornen enthält.

24. Folie nach einem der Ansprüche 1 bis 14, **dadurch gekennzeichnet, dass**
- die Außenschichten aus PE-LLD mit einer Dichte von 0,914 g/cm³ gebildet sind,
- die Zwischenschichten aus einer Mischung von 80% EVA mit 5% Vinylacetat und von 20% eines Terpolymers Ethylen - Propylen - Ethyliden Norbornen mit einer Dichte von 0,88 g/cm³ gebildet sind,
- die Kernschicht aus einer Mischung von 80% PE-ULD mit einer Dichte von 0,905 g/cm³ und von 20% des Terpolymers Ethylen - Propylen - Ethyliden Norbornen mit einer Dichte von 0,88 g/cm³ der Zwischenschichten gebildet ist.

25. Folie nach einem der Ansprüche 1 bis 15, **dadurch gekennzeichnet, dass**
- das Copolymer von Ethylen und der zweiten Verbindung ein impaktmodifiziertes heterophasisches Copolymer ist.

26. Folie nach einem der Ansprüche 1 bis 15, **dadurch gekennzeichnet, dass**
- das Copolymer von Ethylen und der zweiten Verbindung eine impaktmodifizierte heterophasische Mischung von Polypropylen mit einem Copolymer von Ethylen und Propylen enthält.

27. Folie nach einem der Ansprüche 1 bis 14, **dadurch gekennzeichnet, dass**
- die Außenschichten aus PE-LLD mit einer Dichte von 0,914 g/cm³ gebildet sind,
- die Zwischenschichten aus einer Mischung von 80% EVA mit 5% Vinylacetat und von 20% einer impaktmodifizierten heterophasischen Mischung von Polypropylen mit einem Copolymer von Ethylen und Propylen mit einer Dichte von 0,870 g/cm³ gebildet sind,
- die Kernschicht aus einer Mischung von 80% PE-ULD mit einer Dichte von 0,905 g/cm³ und von 20% der impaktmodifizierten heterophasischen Mischung von Polypropylen mit dem Copolymer von Ethylen und Propylen mit einer Dichte von 0,870 g/cm³ der Zwischenschichten gebildet ist.

28. Folie nach einem der vorangehenden Ansprüche, **dadurch gekennzeichnet, dass**
- mindestens eine der ersten und zweiten Zwischenschichten, zusätzlich zu dem Polyethylen PE-LLD, mittels eines Metallocenkatalysators hergestelltes Polyethylen enthält.

29. Folie nach einem der vorangehenden Ansprüche, **dadurch gekennzeichnet, dass**
- die Kernschicht, zusätzlich zu dem Polyethylen PE-ULD, von 20 bis 50 Gew.% Polyethylen PE-LMD oder PE-mMD enthält.

30. Folie nach einem der vorangehenden Ansprüche, **dadurch gekennzeichnet, dass**
- die Kernschicht, zusätzlich zu dem Polyethylen PE-ULD, von 20 bis 35 Gew.% Polyethylen PE-LMD oder PE-mMD enthält.

31. Folie nach einem der vorangehenden Ansprüche, **dadurch gekennzeichnet, dass**
- die Folie durch Strahlung vernetzt ist.

32. Verwendung der Folie nach einem der vorangehenden Ansprüche als Verpackung.

33. Verwendung der Folie nach einem der Ansprüche 1 bis 31 als Verpackung um ein oder mehrere Objekte, die durch Heißsiegeln geschlossen ist.
